Europäisches Patentamt

(19) European Patent Office

Office européen des brevets

(11) Publication number: **0 226 355 B1**

# EUROPEAN PATENT SPECIFICATION

(45) Date of publication of patent specification: **15.05.91**   (51) Int. Cl.⁵: **G11B 5/55**

(21) Application number: **86309186.4**

(22) Date of filing: **25.11.86**

(54) Actuator access control system.

(30) Priority: **26.11.85 JP 263699/85**

(43) Date of publication of application:
**24.06.87 Bulletin 87/26**

(45) Publication of the grant of the patent:
**15.05.91 Bulletin 91/20**

(84) Designated Contracting States:
**DE FR GB**

(56) References cited:
**EP-A- 0 103 493**

**IBM JOURNAL OF RESEARCH AND DEVEL-
OPMENT, vol. 18, no. 6, November
1974,pages 506-512, Armonk, New York, US;
R.K. OSWALD "Design of a disk file head
positioning servo"**

**RESEARCH DISCLOSURE, no. 248, December
1984, pages 588-589, Emsworth, Hampshire,
GB; "Single track step"**

**HEWLETT PACKARD JOURNAL, vol. 35, no. 1,
january 1984, pages 14-20, Amstelveen, NL;
R.F. BELL et al.: "Head positioning in a large
disc drive"**

(73) Proprietor: **NIPPON TELEGRAPH AND TELE-
PHONE CORPORATION
1-6 Uchisaiwaicho 1-chome Chiyoda-ku
Tokyo(JP)**

(72) Inventor: **Mizukami, Makoto
1-17-9, Saiwai-cho
Fuchu-shi Tokyo(JP)**
Inventor: **Otani, Koji
4-19-6-105, Sekimachi-minami
Nerima-ku Tokyo(JP)**
Inventor: **Takanami, Shuichi
4-16-2-405, Sekimachi-minami
Nerima-ku Tokyo(JP)**

(74) Representative: **Skone James, Robert Edmund
et al
GILL JENNINGS & EVERY 53-64 Chancery
Lane
London WC2A 1HN(GB)**

EP 0 226 355 B1

## Description

This invention relates to an access control system for fast positioning of an actuator which carries a plurality of magnetic heads in a magnetic disk storage/memory system.

In a large-capacity magnetic disk storage for an on-line system, the throughput must be increased so that the large storage capacity of the hardware is used effectively.

A multi-actuator system has a plurality of actuators, each of which carries magnetic heads independently. The system results in high speed access. Therefore, use of a multi-actuator increases the throughput considerably.

However, a multi-actuator has a problem that the mechanical power applied to an active actuator is undesirably transferred to an adjacent actuator through mechanical parts of the head/disk assembly (HDA), and upsets accurate tracking of that adjacent actuator. Such disturbance would interfere with the positioning of the adjacent actuator and cause a positioning error. It is important to reduce this positioning error caused by interaction in an HDA which employs a multi-actuator.

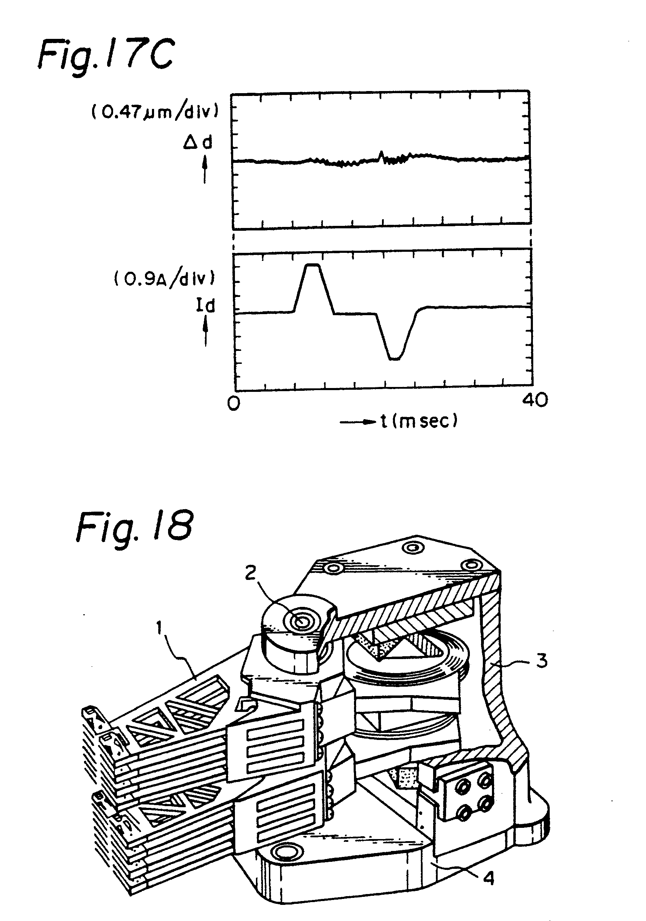

Fig. 18 of the accompanying drawings shows a perspective view of a swing-type multi-actuator which has two actuators. The device comprises two actuators 1, a pivot shaft 2, a magnet housing 3 and a base support 4. The two actuators 1 are mechanically coupled with each other through the pivot shaft 2, the magnet housing 3 and the base support 4. Therefore, mechanical vibration of one actuator is induced in the other actuator through the mechanical coupling parts (the pivot shaft, the magnet housing, and the base support), and the transferred vibrations would cause an error in positioning of the other actuator.

The mechanical vibration has the frequency spectrum between several hundreds Hz and several kHz. Since the cutoff frequency in a servo loop for head positioning is usually several hundreds Hz, which is less than about one seventh of the mechanical resonance frequency of the actuator 1, the servo loop circuit cannot make the actuator follow the transferred mechanical vibration and, therefore, the transferred undesired mechanical vibration directly causes a head positioning error.

A prior art for solving the problem (JP 60-233701) is to decrease the slewing rate (gradient) of the drive current in the actuator 1 so that the current has no spectrum close to the mechanical resonance frequency. This decrease in slewing rate has the advantage that the positioning servo loop is held stable, and the circuit is simple.

However, the prior art proposal has the disadvantages that the drive current or the power supply voltage must be large, since the waveform of the drive current must be triangular for high-velocity operation, and that the temperature of the head disk assembly is considerably increased due to large power consumption in a voice coil motor (VCM) and in an amplifier which feeds the current to the VCM.

It is an object of the present invention to provide an improved actuator access control system.

According to the invention there is provided an actuator access control system for positioning an actuator which carries a magnetic head to a desired track during a seek stroke by feeding drive current into a motor of the actuator, characterised in that the drive current comprises a pair of succesive trapezoidal waveform signals of opposite polarities; and in that the waveform factor, which is the ratio of the peak plateau period to the base period of the trapezoidal waveform, is dependent upon the length of the seek stroke such that the factor increases with increase in the seek stroke length whereby, on the one side the mechanical resonance frequency of the actuator coincides with a frequency in the power spectrum of the trapezoidal waveform at which the power level is low or zero and on the other side the power consumption of the motor is minimised.

Embodiments of the invention will now be described, by way of example, with reference to the accompanying drawings, in which

Fig. 1A shows a trapezoidal waveform used in the present invention;

Fig. 1B shows a power spectrum of the waveform of Fig. 1A;

Fig. 2 shows power spectra of drive current for each value of waveform factor $\gamma$;

Fig. 3 shows curves of power consumption in a drive coil and the amplitude of drive current for each value of $\gamma$ which is the ratio of the peak plateau period to the base period of the trapezoid;

Fig. 4A shows curves of power spectra of the drive current for each value of y which is equal to $T_0/T_{ACC}$;

Fig. 4B shows an envelope of the power spectra of Fig. 4A;

Fig. 4C shows a trapezoidal waveform for explanation of Figs. 4A and 4B;

Figs. 5A, 5B and 5C show the trapezoidal drive current for each seek stroke;

Fig. 6 is a block diagram of an actuator control circuit according to the present invention;

Fig. 7 is a block diagram of a feed forward velocity control signal generator circuit for use in the control circuit of the present invention;

2

Fig. 8A shows a trapezoidal waveform to be generated;

Fig. 8B is a flowchart of a process for generating the trapezoidal waveform;

Fig. 9 shows a waveform of drive current by feed forward velocity control and feed back velocity control;

Fig. 10 is a block diagram of a second embodiment of a control circuit according to the invention;

Fig. 11 is a waveform of a velocity profile used in the circuit of Fig. 10;

Fig. 12 is a block diagram of a third embodiment of a control circuit according to the invention;

Fig. 13 is a waveform of a velocity profile used in the circuit of Fig. 12;

Fig. 14 is a block diagram of another embodiment of a control circuit according to the invention;

Fig. 15 shows curves for explaining the operation of the circuit of Fig. 14;

Fig. 16 shows an example of characteristics of a head positioning error in a prior arrangement;

Figs. 17A, 17B and 17C show examples of characteristics of a head positioning error in the present invention; and

Fig. 18 is a partly broken sectional view of a conventional swing-type positioner with two actuators for use in association with the present invention.

The mechanical transfer function of a head positioning mechanism of the device of Fig. 18 which has two actuators is shown by the following equation.

$$
\begin{bmatrix} E_1 \\ E_2 \end{bmatrix} = \begin{bmatrix} G_{11} & G_{12} \\ G_{21} & G_{22} \end{bmatrix} \times \begin{bmatrix} F_1 \\ F_2 \end{bmatrix} \qquad (1)
$$

where; $E_i$ is the relative displacement between a head i ($i = 1$ or 2) and a desired track,

$F_i$ is drive power for an actuator i, and

$G_{11}$, $G_{12}$, $G_{21}$ and $G_{22}$ are compliances which correspond to a transfer function of the positioning system. It should be noted in Fig. 18 which has a common pivot shaft 2 for two actuators 1, the mutual compliances $G_{12}$ and $G_{21}$ are affected considerably by the bending resonance of the pivot shaft 2.

Although a reduction in the mutual compliances $G_{12}$ and $G_{21}$ in the mechanical design is effective to reduce interaction of multi-actuators, there is a limitation to reducing vibration by way of only mechanical design and/or mechanical parts.

The present inventors have found that in equation (1) the interaction between actuators depends upon the product of mutual compliance and drive power ($G_{12}F_2$, $G_{21}$,$F_1$). Therefore, even if the mutual compliances $G_{12}$ and $G_{21}$ are large, the interaction may be small or zero if the spectra of the drive powers $F_1$ and $F_2$ are small or zero.

In other words, a pair of trapezoidal drive currents for acceleration and deceleration can suppress spectra close to the mechanical resonance frequency of mutual compliances $G_{12}$ and $G_{21}$, and at higher frequencies. Hence, the trapezoidal drive current can provide accurate and stable positioning of a head, and the magnitude of the mutual interaction can be adjusted by controlling the shape of trapezoidal waveform. In use of the trapezoidal driving current, the less the mutual interaction is, the more the power consumption in the drive coil of the actuator increases, and the problem of the power consumption must therefore be considered.

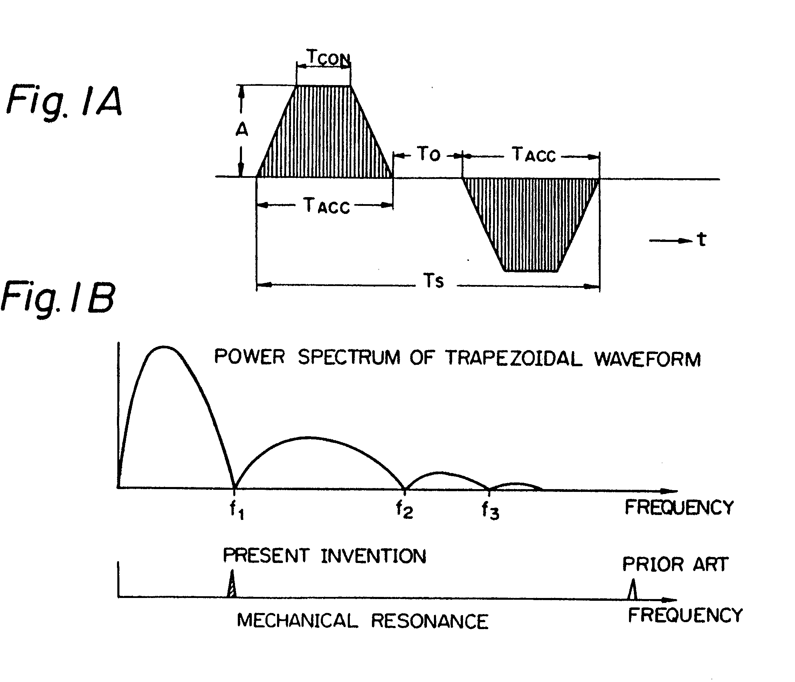

Fig. 1A shows a trapezoidal waveform. A pair of trapezoidal waveforms with opposite polarities as shown in Fig. 1A with waveform factor $\gamma$, $\delta$. The power spectrum of the drive current in the actuator, and the power consumption in the drive coil for each form factor are now considered. In Fig. 1A,

$T_{ACC}$ is the time of acceleration or deceleration (base of the trapezoidal waveform)

$T_{CON}$ is the time of constant acceleration or deceleration (the plateau of the trapezoidal waveform)

$T_0$ is the time of constant velocity between acceleration and deceleration (i.e. the drive current is zero) Also,

$\gamma = T_{CON}/T_{ACC}$

$\delta = T_0/T_{ACC}$

Fig. 1B shows the power spectrum of the trapezoidal waveform of Fig. 1A. As shown in Fig. 1B, there are some characteristics frequencies ($f_1$, $f_2$, $f_3$ ...) where the power is zero or at least very small. Therefore, when the mechanical resonance frequency of the actuator coincides with one of those characteristics frequencies, the mechanical interaction is suppressed. It should be noted that the prior devices cannot have any characteristic frequencies such as $f_1$, $f_2$, $f_3$ ... so that a prior actuator must have a high mechanical resonance frequency. On the other hand, the mechanical resonance frequency of an actuator according to the present invention appears in the range where a power spectrum of the drive current exists, and it coincides with a frequency at which the power level is minimum.

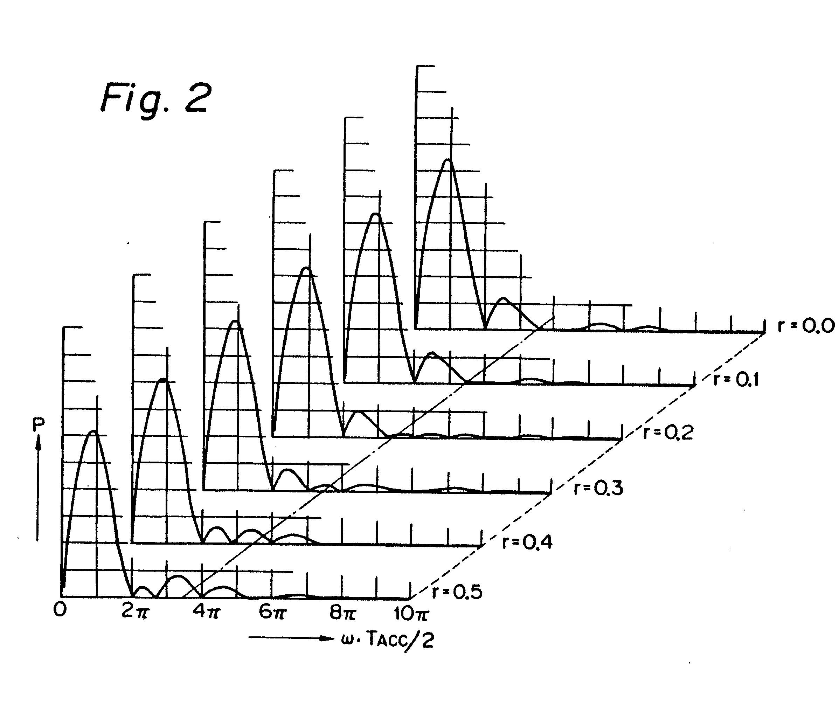

Fig. 2 shows power spectra of the drive current when an actuator 1 moves a predetermined distance in a predetermined time for a value of ($\gamma$) between 0.0 and 0.5, where ($\delta$) is zero. The waveform factor (0,0) is the same as a triangular drive current using the prior slewing rate restriction method, and the waveform factor (1,1) is the same as a conventional "bang-bang" control which uses a rectangular waveform.

It should be appreciated in Fig. 2 that when the waveform changes from ($\gamma = 1.0$) which corresponds to a rectangular waveform to ($\gamma = 0.0$) which corresponds to a triangular waveform, the power spectrum P decreases at a frequency higher than the normalised frequency $\omega T_{ACC}/2 = 3.5\pi$ when ($\gamma$) is larger than 0.2. On the other hand, when ($\gamma$) is smaller than 0.2, the high-frequency power spectrum P increases again as the value ($\gamma$) decreases. Accordingly, it is desirable to select the value ($\gamma$) between 0.1 and 0.4, and preferably ($\gamma$) = 0.2, for the suppression of interaction.

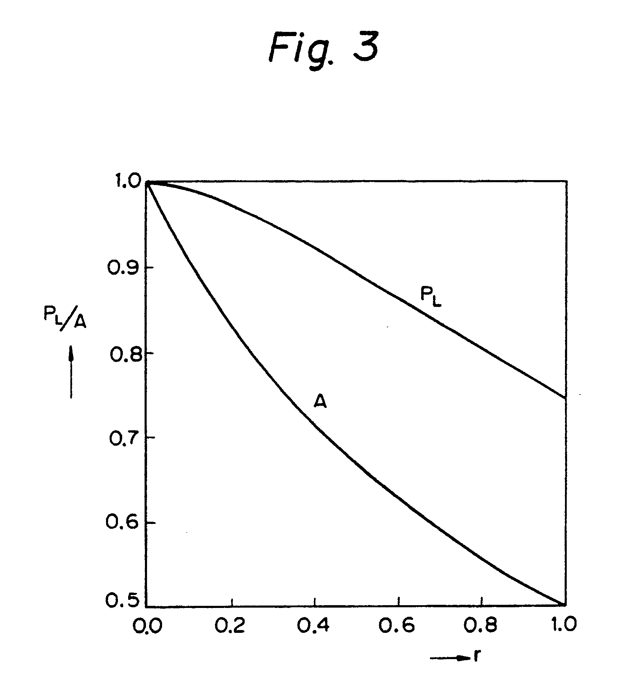

Fig. 3 shows the dependency of the amplitude A of the drive current and the power consumption $P_L$ in the drive coil on the value ($\gamma$). As shown in Fig. 3, the larger the value ($\gamma$), the smaller are the amplitude A and the power consumption $P_L$. Therefore, when there is a margin in preventing mechanical interaction, it is preferably to use a trapezoidal waveform which has a value ($\gamma$) larger than 0.2.

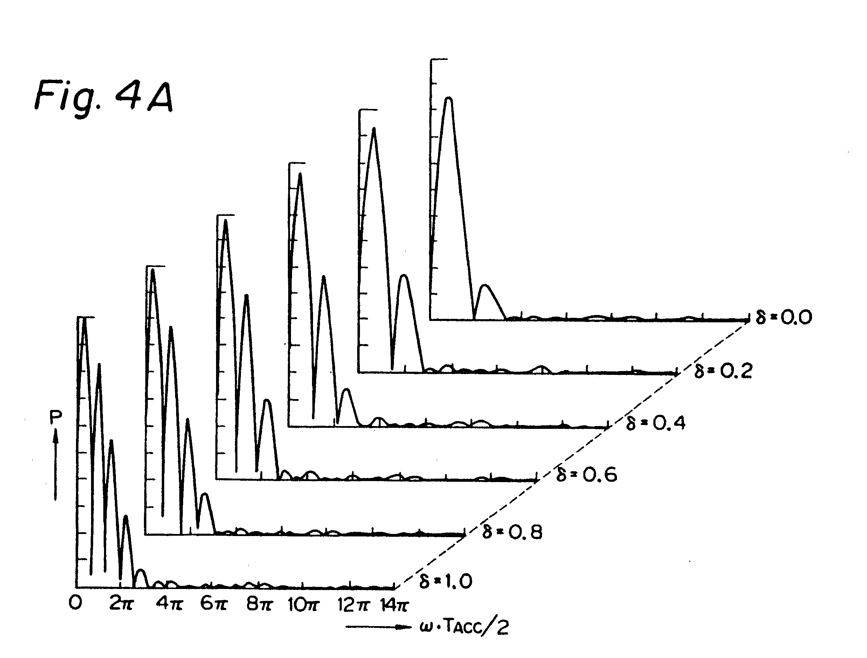

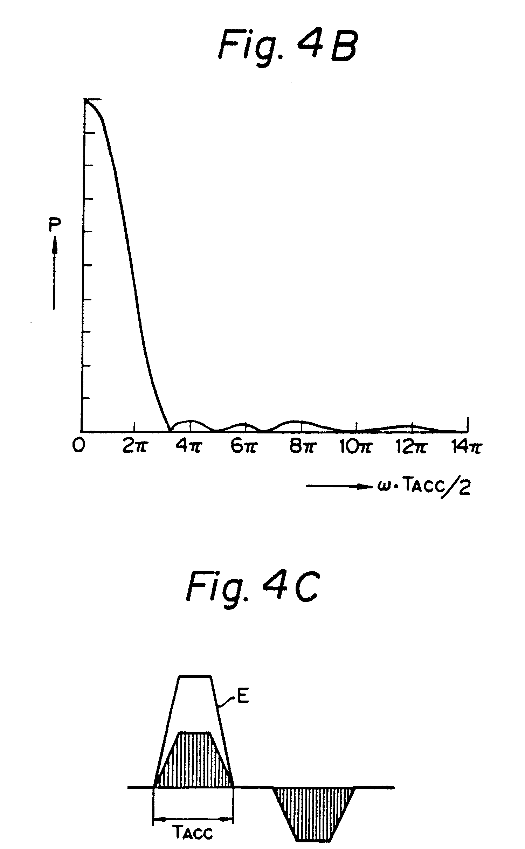

Fig. 4A shows the distribution of the power spectrum of drive current when a constant velocity period in which no drive current flows is provided between the acceleration period and the deceleration period. In other words, Fig. 4A shows the curves of the power spectra of drive current based upon Figs 2 and 3 on the condition that the value ($\gamma$) and the amplitude A do not change, but only the value ($\delta$) is changed.

The envelopes of the power spectra of Fig. 4A are included in the envelope of Fig. 4B, which is the envelope of the power spectra of a positive trapezoidal waveform E in Fig. 4C. The waveform E is an isolated (positive) waveform having an amplitude twice as high as that of each of the pair of trapezoidal waveforms. The envelope of Fig. 4B depends upon only the value ($\gamma$) and the acceleration time $T_{ACC}$, but is independent of the value ($\delta$).

Therefore, when a constant velocity region is provided, the maximum magnitude of mechanical interaction is defined by the shape of the acceleration current, but is independent of the seek stroke.

Therefore, when there is a margin in the mechanical interaction and the seek time, it is preferable to use a trapezoidal waveform with a value ($\gamma$) larger than 0.2, and to use a constant velocity duration ($\delta > 0$), so that considerable power consumption in the drive coil is saved.

In view of the above analysis, in a short track access in which acceleration time $T_{ACC}$ is short, and the fundamental spectrum of drive current is in the high-frequency region, a trapezoidal waveform with a value ($\gamma$) nearly equal to 0.2 is used so that mechanical interaction is suppressed; (2) in a middle and/or long-stroke seek in which the acceleration time $T_{ACC}$ is relatively long, and there is a margin for suppressing mechanical interaction, a trapezoidal waveform with a value ($\gamma$) larger than 0.2, and a value ($\delta$) larger than 0 is used so that the magnitude of mechanical interaction is similar to that in a short-stroke seek, and the waveform factor ($\gamma,\delta$) is determined for each seek length so that the average power consumption in the drive coil is minimized.

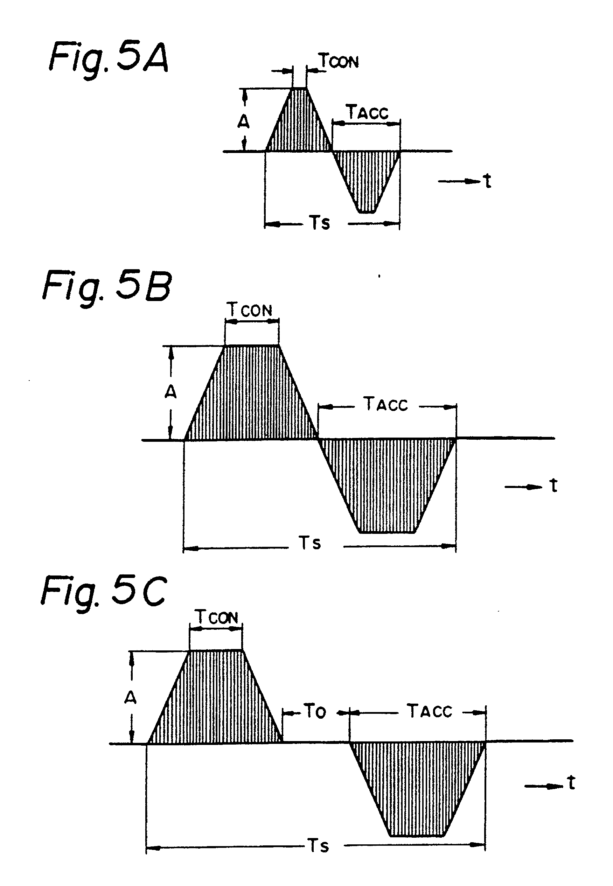

Fig. 5 shows the waveform in each case.

```
In Fig. 5A (short-stroke seek),   (γ)=0.2, and (δ)=0

In Fig. 5B (middle-stroke seek),  (γ)>0.2, and (δ)=0

In Fig. 5C (long-stroke seek),    (γ)>0.2, and (δ)≠0
```

In the short-stroke seek of Fig. 5A, the acceleration time $T_{ACC}$ is short, and the drive current includes a large amount of high-frequency spectra. However, as the seek stroke is short and the amplitude A of the drive current is small, the power consumption is small and, therefore, the waveform factor ($\gamma,\delta$) which is effective to suppress mechanical interaction does not give rise to a problem of excess heating.

In a middle-stroke seek in Fig. 5B, the seek stroke is longer and the acceleration time $T_{ACC}$ of the actuator 1 is longer. Therefore, there is a margin for suppressing mechanical interaction. However, since the probability of middle-stroke seek is relatively large, the requirements for the seek time and the power consumption in the drive coil are severe. Therefore, the waveform factor ($\gamma > 2$, $\delta = 0$) is used, so that high speed access is obtained, and the power consumption in the drive coil is saved to reduce heat generation in an HDA. When ($\gamma$) is larger than 0.2, the amplitude A of the drive current may be small as shown in Fig.

4, and the power supply voltage and the power consumption in the drive amplifier are also reduced.

In a long-stroke seek region in Fig. 5C, the acceleration time $T_{ACC}$ of the actuator 1 is long, the fundamental component of the spectra of drive current resides only in a low-frequency region, the magnitude of the mechanical interaction is not large, and the probability of the access is not large. Therefore, if a constant velocity region is provided ($\delta = 0$), the average seek time does not increase so much. Therefore, the waveform factor ($\gamma > 0.2$, $\delta > 0$) is used to save power consumption. The presence of the constant velocity region reduces the maximum velocity at the access time, and reduces the shock to the head positioning mechanism in a runaway.

It should be noted that the effect operates also for the transfer functions $G_{11}$ and $G_{22}$ of an accessed actuator 1 itself in the equation (1). The vibration of the accessed actuator is therefore also suppressed. Hence, smooth actuator operation is accomplished. The present invention is therefore effective not only to suppress interaction, but also to provide stable control of the actuator itself.

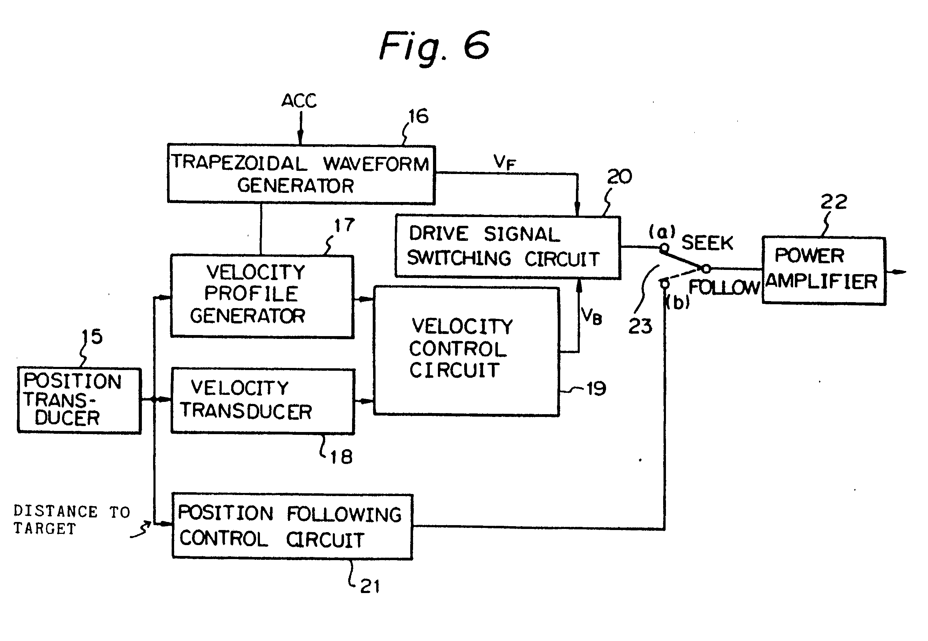

Fig. 6 is a block diagram of an access control circuit according to the present invention. The circuit comprises a position transducer 15, a trapezoidal waveform generator 16, a deceleration velocity profile generator 17, a velocity transducer 18, a velocity control circuit 19, a drive signal switching circuit 20, a position following control circuit 21, and a power amplifier 22.

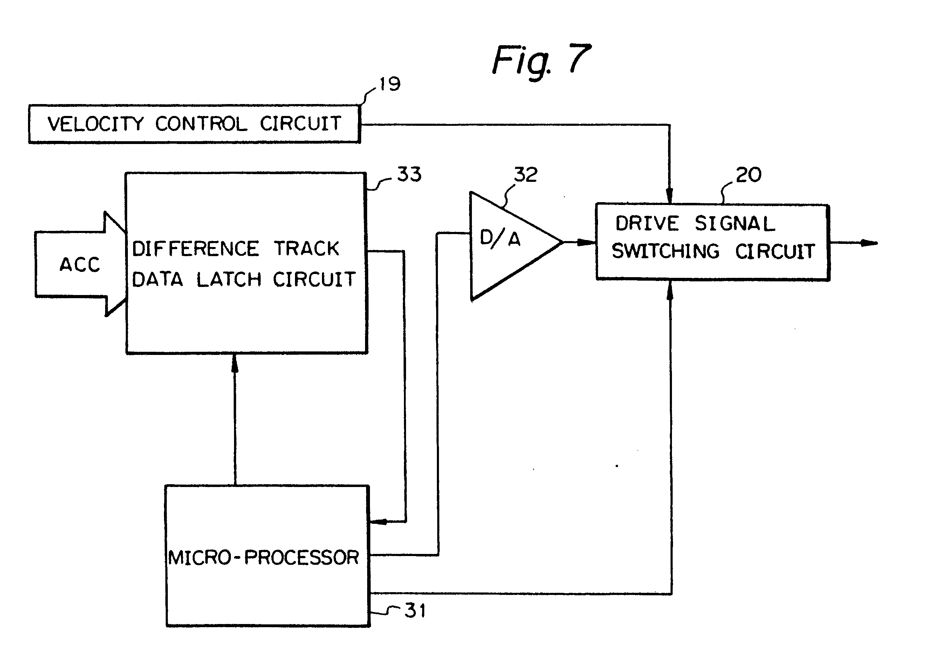

The trapezoidal waveform generator 16 is shown in Fig. 7, and comprises a micro-processor 31, a D/A (digital to analog) converter 32 and a difference track data latch circuit 33.

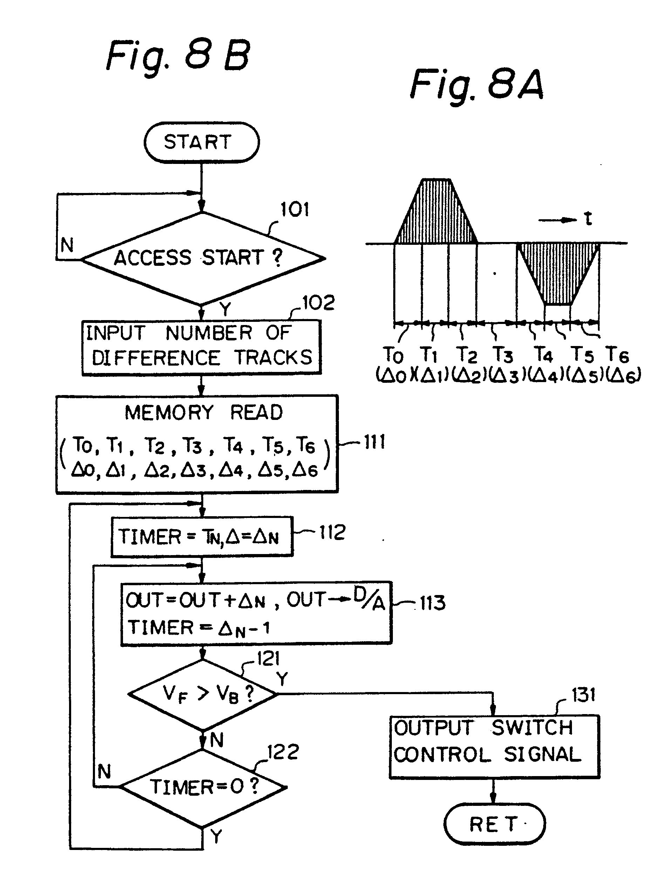

The operation of the micro-processor 31 is shown in the flow-chart in Fig. 8, in which an acceleration signal, and a deceleration signal of the same waveform as the acceleration signal and of opposite polarity, are generated according to the seek stroke, so that the actuator 1 is moved to the desired track.

The power amplifier 22 (Fig. 6) is a current control type amplifier which is not affected by voltage fluctuations in the power supply, nor by change of resistance of a drive coil due to change of temperature, so that the feed-forward velocity control by the trapezoidal signals is stably carried out.

However, a small control error is inevitable due to external disturbances and change of torque constant of the actuator 1 during feed-forward velocity control.

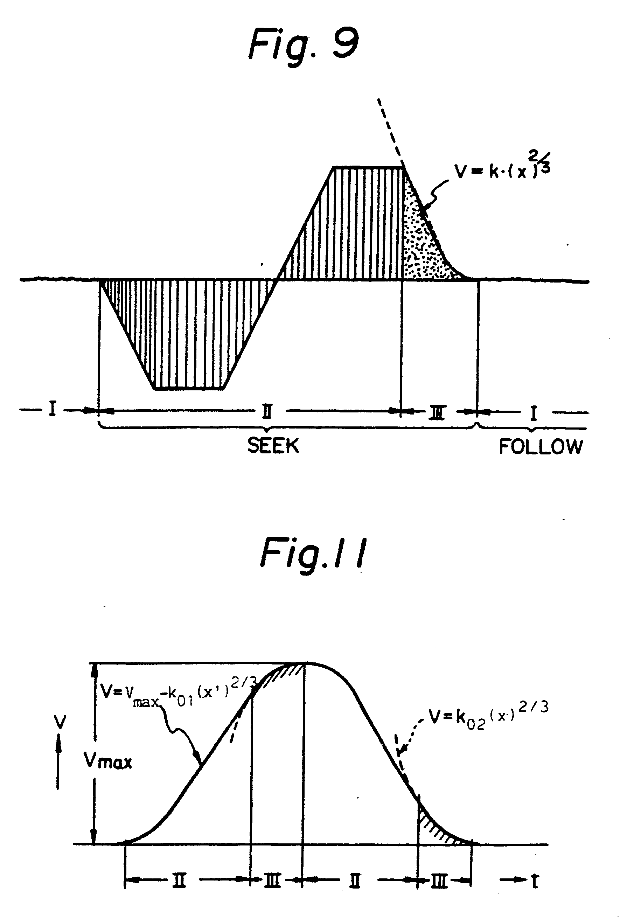

Referring to Fig. 9, in order to solve the above problem, the seek time which lies between track following periods (I), is divided into a feed-forward velocity control period (II), and a feed-back velocity control period (III) which is about 20-30 percent of the total of the periods (II) and (III). The period (III) functions to decelerate the actuator 1 to position it at the desired position and to remove the control error in the period (II). For that purpose, the trapezoidal waveform generator 16 (Fig. 6) and the velocity control circuit 19 which generates a drive signal for causing the actuator 1 to follow the deceleration reference velocity profile, operate at the same time. When the amplitude of the trapezoidal signal exceeds the output of the velocity control circuit 19, the drive signal switching circuit 20 switches the drive signal from the trapezoidal waveform from the circuit 16 to the feed-back control signal from the circuit 19.

If the deceleration reference velocity profile generator 17 sets the velocity profile $V = k \cdot (x)^{2/3}$ in which the deceleration drive signal almost decreases linearly for the object position, the actuator may be decelerated accurately by keeping the drive signal trapezoidal.

The generator 17 may be omitted, for simplification of the circuit, since the sensitivity of the interaction suppression control by the trapezoidal signal is low as regards the change of the control parameters. If it is omitted, the position error (distance to target) is taken as the deceleration reference velocity.

The position following control circuit 21 functions to follow the actuator 1 to the object position, after the actuator 1 reaches the object position by the feed-forward velocity control, and the switch 23 is switched to the contact (b).

The operation of the circuit will now be described with reference to Fig. 8. The trapezoidal waveform is divided into time durations $T_0$ to $T_6$, as shown in Fig. 8A, according to the points of change in the amplitude of the signal, and incremental values (or decremental values) $\Delta_1$ to $\Delta_6$ at respective change points are stored in the memory table of the memory of the microprocessor 31.

When the access command ACC (Fig. 7) states how many tracks the actuator should seek, that command ACC is stored in the latch circuit 33 according to the instruction by the microprocessor 31. Then, the status 101 (seek start) changes to Y (yes). Then, in a step 102, the number of difference tracks is loaded by the microprocessor 31. In a step 111, the table data, $T_0$ to $T_6$ and $\Delta_0$ to $\Delta_6$, are loaded into the microprocessor 31. In a step 112, the timer and the output register are set to the n'th time duration ($T_N$) and the n'th incremental value ($\Delta_N$). In a step 113, $\Delta_N$ is accumulated (OUT = OUT + $\Delta_N$), the accumulated sum is sent to the D/A converter 32 (OUT→D/A), and the content of the timer is updated by subtracting 1 (timer = $\Delta_N$-1). In a step 121, the feed-forward control output $V_F$ is compared with the feed-back control output $V_B$. If the output of the step 121 is N (no), and the content of the timer is not zero (step 122), the steps 113, 121 and 122 are repeated.

If the output of the step 122 is Y (yes) because the timer becomes zero, the steps 112, 113, 121 and 122 are repeated so that the process for the next time slot $T_{l+1}$ is carried out.

When the output of the step 121 becomes Y (yes), the step 131 sends the switch control signal so that the switch 19 is switched to the contact (b) (feed-back control). Then the control returns to the step 101.

As mentioned above, the microprocessor can generate any desired trapezoidal waveform, so that the optimum trapezoidal waveform depending upon the mechanical resonance frequency is obtained.

The present invention is also applicable to a digital positioning control, in which accurate detection of location is possible. The invention uses a feed-forward control which is implemented by addition/subtraction for the major portion of the control, and a feed-back control when the speed of the actuator 1 reaches about one fifth of the maximum velocity. Therefore, the necessary signal processing speed for the access control circuit is considerably reduced.

Furthermore, time-division multiplex control of the actuators is possible by use of the invention.

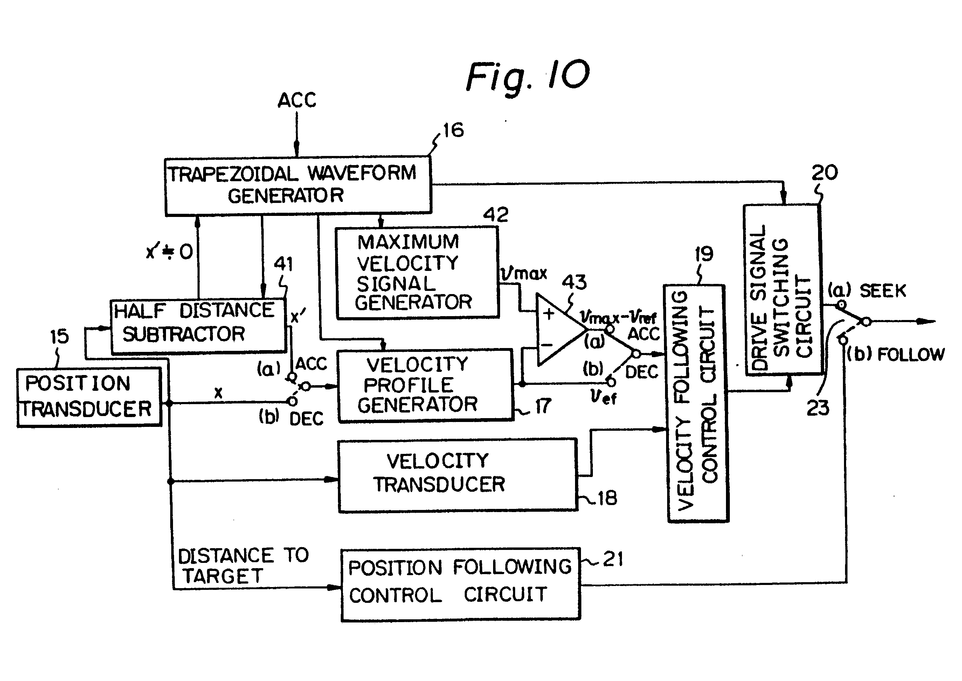

Fig. 10 is a block diagram of a second embodiment of a control circuit according to the invention. The circuit includes a half distance subtractor 41, a maximum velocity signal generator 42 and an analog adder 43. The maximum velocity signal generator 42 is implemented by a memory which provides the maximum reference velocity of the actuator according to the seek stroke. The subtractor 41 provides the remaining seek stroke until the half seek stroke position.

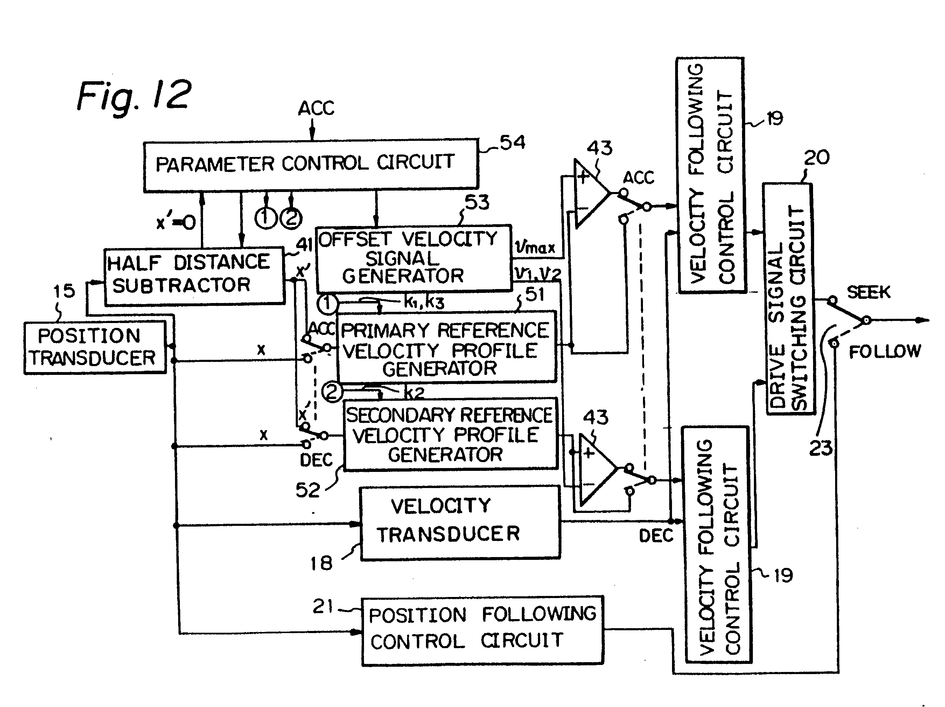

The embodiment of Fig. 10 uses the symmetrical nature of the trapezoidal waveform. The circuit provides a reference velocity profile $V = V_{max} - k_{.01}(x')^{2/3}$ (where x' is the remaining seek stroke length to the half seek stroke position), and $V = k_{.02}(x)^{2/3}$ (where x is the remaining stroke length to the object position), as shown in Fig. 11. In the embodiment of Fig. 10, a feedback control is used in both the acceleration step and the deceleration step of an actuator 1.

When a constant velocity step in which no drive current is provided in a long seek stroke operation is involved, the half distance subtractor 41 provides the remaining stroke up to the starting point of the constant velocity control.

The embodiment of Fig. 10 has the feature that the control error of the actuator is compensated during the acceleration step, so that the influence of an external disturbance is reduced.

Fig. 12 is a block diagram of a third embodiment of access control circuit according to the invention. The circuit includes a primary reference velocity profile generator 51, a secondary reference velocity profile generator 52, an offset velocity signal generator 53 and a parameter control circuit 54.

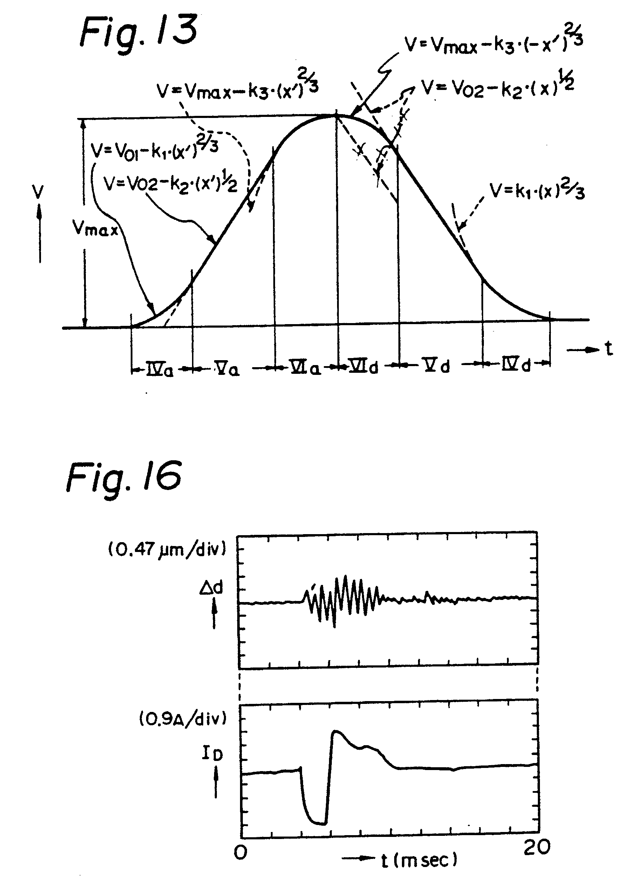

The embodiment of Fig. 12 has the pair of reference velocity profile generators 51 and 52 which are not provided in the embodiment of Fig. 10. Those generators 51 and 52 generate the exponential function signals as shown in the reference velocity profile of Fig. 13.

When the actuator is accelerated in a control period IVa, a velocity reference signal $V = V_{01} - k_1(x')^{2/3}$ is generated by the primary profile generator 51 and the offset velocity signal generator 53, depending upon the remaining distance X' to the half seek stroke position.

Furthermore, in a control period Va the secondary profile generator 52 and the offset velocity signal generator 53 provide $V = V_{02} - k_2(x')^{1/2}$, and in a control period VIa the primary profile generator 51 and the offset velocity signal generator 53 provide a velocity reference signal $V = V_{max} - k_3(x')^{2/3}$.

In the deceleration period, the remaining distance X' to the half seek stroke position is replaced by the remaining distance X to the object track, and the velocity reference signal is generated in the sequence of control periods VId, Vd and IVd, in opposite steps to the acceleration period.

The switching of the velocity reference generator, or the control period, is accomplished by the switching circuit 20, when the outputs of all of the velocity reference generators coincide with each other.

The control parameters for the above operations are provided by the parameter control circuit 54, which may be similar to that of Fig. 7.

The embodiment of Fig. 12 has the feature that the circuit structure is similar to that of a conventional access control circuit, and that the trapezoidal waveform control is accomplished with stable operation, without being affected by external disturbances.

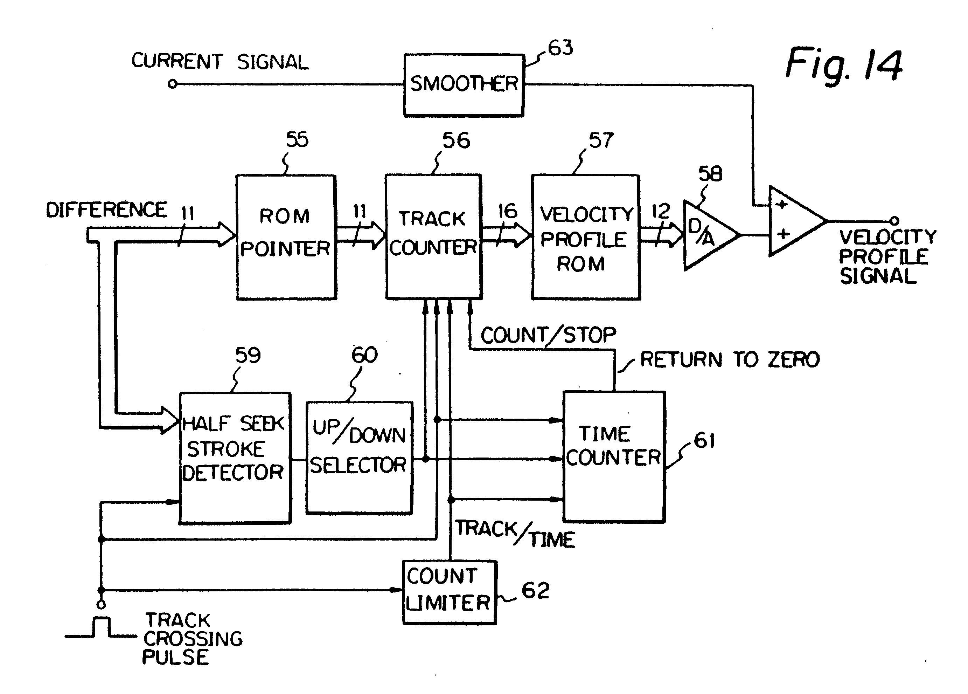

Fig. 14 shows a fourth embodiment. The circuit of Fig. 14 generates a velocity reference signal which causes trapezoidal drive current to flow in the VCM. The circuit includes a ROM pointer 55, a track counter 56, a velocity profile generator 57, a D/A converter 58, a half seek stroke detector 59, an up/down selector 60, a time counter 61, a count limiter 62 and a smoother 63.

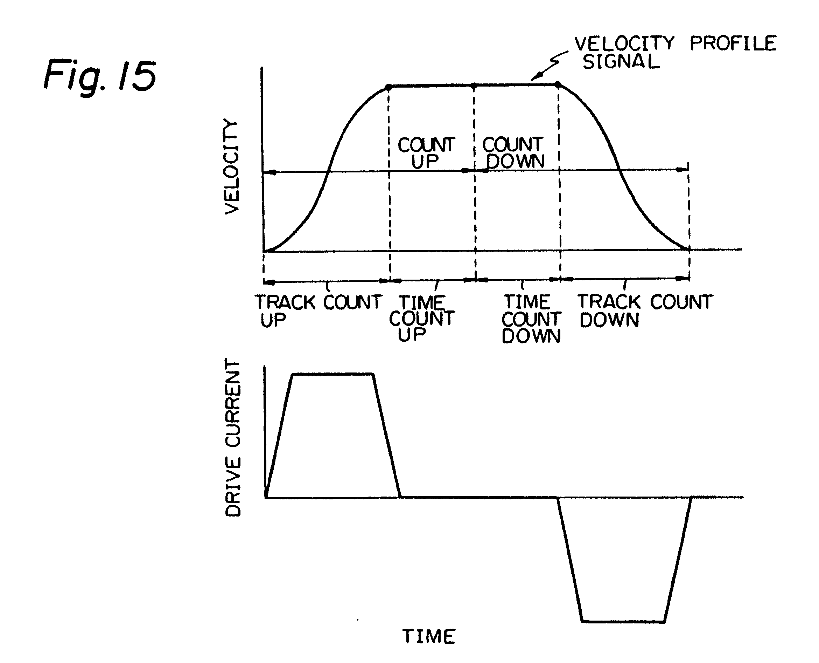

Fig. 15 shows the operation and waveforms of the circuit of Fig. 14. The velocity profile generator 57 stores the velocity reference signal according to the seek stroke, and the storage location of each velocity reference signal is indicated by the ROM pointer 55. When the seek operation begins, a track crossing pulse, which is provided when a head crosses a track boundary, increments the track counter 56, and the velocity profile generator 57 provides the velocity reference signal in sequence. The count limiter 62 operates also. The count limiter 62 functions to detect that the velocity reference signal reaches the maximum value ($V_{max}$). When the count limiter 62 provides an output, the track counter 56 stops, and instead, the time counter 61 begins to be incremented until the half seek stroke detector 59 recognises that a head has reached the $\frac{1}{2}$ seek stroke position. Thus, the velocity reference signal in the acceleration period is generated.

When the half seek stroke detector 59 recognises that the head has reached the half seek stroke position, the deceleration operation begins. In the deceleration period, the velocity reference signal is generated in the opposite manner to that of the acceleration period, and the time counter 61 is decremented until it reaches zero. When the count reaches zero, the track counter 56 becomes active. At that time, the track counter 56 is selected to be in the count-down mode by the half seek stroke detector 59 and the up/down selector 60. The velocity reference signal is generated by decrementing the track counter 56.

The smoother 63 integrates the drive current functions to smooth the stepwise velocity reference signal.

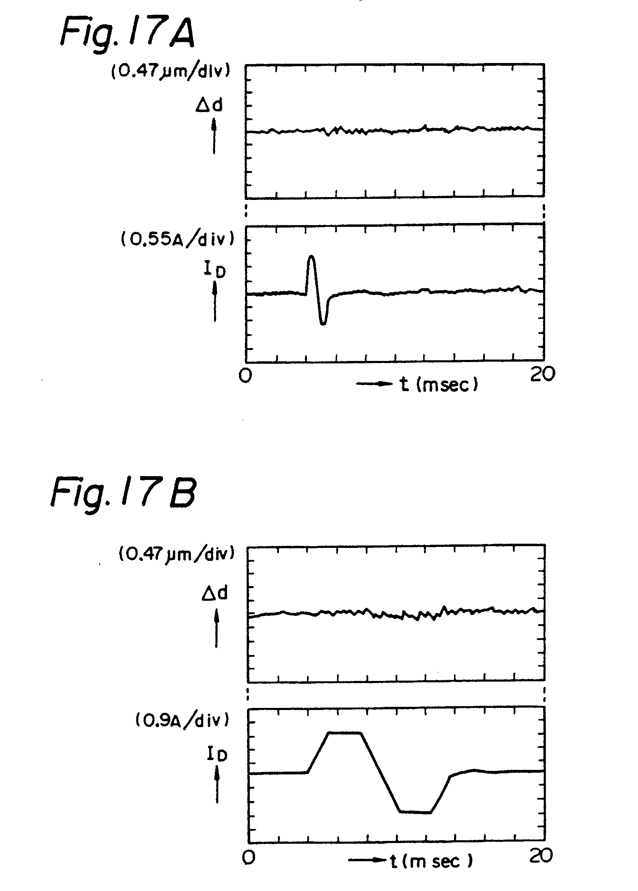

Figs. 16 and 17 show the seek operation characteristics of the two swing-type actuators. Those show the waveform $I_D$ of the drive current, and the head positioning error $\Delta_D$ produced by mechanical vibration interaction when another actuator is driven. Fig. 16 shows the conventional case in which track seeking with the maximum interaction is executed. Fig. 17A shows the short seek stroke operation of the present invention, Fig. 17B shows the middle seek stroke operation of the invention, and Fig. 17C shows the long seek stroke operation of the invention.

It should be noted in those figures that the head positioning error produced by the interaction is suppressed by more than 15 dB. Furthermore, the present invention provides faster and more accurate position control of the actuators.

It will be apparent that some modifications in the embodiments are possible to those skilled in the art. For instance, the waveform factor ($\gamma$) might be between 0.1 and 0.4.

As described above in detail, in the present invention an actuator is controlled in the seek operation by a trapezoidal waveform current, and the mechanical interaction is suppressed considerably. Furthermore, since the mechanical resonance of the actuator itself is suppressed, high-speed positioning of the actuator is also achieved. Also, by using the present invention, the track density of a magnetic disk storage can be considerably increased.

Therefore, the present invention is applicable not only to a multi-actuator system, but also a single actuator system.

## Claims

1. An actuator access control system for positioning an actuator (1) which carries a magnetic head to a desired track during a seek stroke by feeding drive current into a motor of the actuator, characterised in that the drive current comprises a pair of successive trapezoidal waveform signals of opposite polarities; and in that the waveform factor ($\gamma$), which is the ratio of the peak plateau period ($T_{CON}$) to the base period ($T_{ACC}$) of the trapezoidal waveform, is dependent upon the length of the seek stroke, such that the factor increases with increase in the seek stroke length, whereby, on the one side the mechanical resonance frequency of the actuator coincides with a frequency ($f_1$) in the power spectrum of the trapezoidal waveform at which the power level is low or zero and on the other side the power consumption of the motor is minimised.

2. A system according to claim 1, characterised in that the actuator (1) is a multiple actuator having a plurality of actuators on one head disk assembly.

3. A system according to claim 1 or claim 2, characterised in that said pair of trapezoidal currents comprise the same waveform.

4. A system according to any preceding claim, characterised in that the drive current comprises a period of zero current ($T_0$) in the coil between said first and second trapezoidal waveform signals.

5. A system according to claim 4, characterised in that the period of zero current ($T_0$) depends upon the length of the seek stroke so that the longer the seek stroke the longer the period of zero current.

6. A system according to any preceding claim, characterised by a trapezoidal waveform signal generator (16) having a memory table which stores data for defining the waveform depending upon the seek stroke; detection means (15) for detecting the location of the actuator (1); a velocity detector (18) coupled to the detection means; a velocity profile generator (17); a velocity control circuit (19) for causing the speed of the actuator to follow the output of the velocity profile generator; switching means (20) which initially passes the output of the trapezoidal waveform generator and switches to the output of the velocity control circuit when the former output exceeds the latter output; and a power amplifier (22) of the current control type coupled to the output of the switching means to drive the motor of the actuator.

7. A system according to any one of claims 1-5, characterised by primary and secondary reference velocity profile generators (51,52) coupled to a parameter control circuit (54) having a memory table which stores data for defining a reference velocity profile depending upon the seek stroke; detection means (15) for detecting the location of the actuator (1); a velocity detector (18) coupled to the detection means; a velocity control circuit (19) for causing the velocity of the actuator to follow the output of the reference velocity profile generators; an offset velocity signal generator (53) coupled to the reference velocity profile generators; a half-distance subtractor (41) for determining the remainder of the seek stroke to a half seek stroke position; switching means (20) which initially passes the output of the primary reference velocity profile generator and switches to the output of the secondary reference velocity profile generator when those outputs are equal and switches to the output of the primary reference velocity profile generator, and after passing the half seek stroke position the previous switching sequence is reversely operated until the velocity of the actuator reduces to zero.

8. A system according to claim 6 or claim 7, characterised in that the or each velocity profile generator (17; 51,52) is an exponential function generator.

9. An actuator access control system according to any of claims 1-6, characterised by a velocity profile generator (57) which generates a velocity reference signal depending upon the length of the seek stroke so that the actuator (1) is moved by the trapezoidal driving current; a ROM pointer (56) for generating a velocity reference pattern depending upon the seek stroke; a track counter (56) for providing the seek stroke distance moved and the remaining distance as a pulse signal which is generated when a head crosses a track; a half seek stroke detector (59) which detects when the head has reached a half seek stroke position; an up/down selector (60) for indicating an acceleration mode or a deceleration mode; a time counter (61) for designating a period of constant speed; a count limiter (62) for indicating a change of acceleration by a track crossing pulse; and a smoother (63) for smoothing the velocity signal; wherein in an acceleration period the track counter is incremented and the velocity reference signal is provided by the velocity profile generator until the count limiter operates, and the track counter then stops and the time counter is incremented until the half seek stroke position detector recognises that the head has reached the half seek stroke position, and in a deceleration period the velocity reference signal is generated by decrementing the counters in opposite steps to the acceleration period.

## Revendications

1. Système de commande d'actionneur pour positionner un actionneur (1) qui porte une tête magnétique sur une piste désirée durant une course de recherche en alimentant un moteur de l'actionneur avec un courant de commande, caractérisé en ce que le courant de commande comprend une paire de signaux successifs de forme d'onde trapézoïdale, de polarités opposées; et en ce que le facteur de forme d'onde ($\gamma$), qui est le rapport de la période du palier de crête ($T_{CON}$) à la période de la base ($T_{ACC}$) de la forme d'onde trapézoïdale, est fonction de la longueur de la course de recherche, de sorte que le facteur augmente avec l'augmentation de la longueur de la course de recherche, moyen par lequel, d'un côté la fréquence de résonance mécanique de l'actionneur coïncide avec une fréquence ($f_1$) dans la puissance spectrique de la forme d'onde trapézoïdale à laquelle le niveau de puissance est faible ou nul et de l'autre côté la puissance absorbée par le moteur est minimalisée.

2. Système selon la revendication 1, caractérisé en ce que l'actionneur (1) est un actionneur multiple ayant une pluralité d'actionneurs sur un système de disque à têtes magnétiques.

3. Système selon la revendication 1 ou la revendication 2, caractérisé en ce que ladite paire de courants trapézoïdaux comprend la même forme d'onde.

4. Système selon l'une quelconque des revendications précédentes, caractérisé en ce que le courant de commande comprend une période de courant nul ($T_0$) dans la bobine entre lesdits premier et deuxième signaux de forme d'onde trapézoïdale.

5. Système selon la revendication 4, caractérisé en ce que la période de courant nul ($T_0$) est fonction de la longueur de la course de recherche, de sorte que plus la course de recherche est longue, plus la période de courant nul est longue.

6. Système selon l'une quelconque des revendications précédentes, caractérisé par un générateur de signal de forme d'onde trapézoïdale (16) ayant une table de mémoire qui stocke des données pour définir la forme d'onde en fonction de la course de recherche; des moyens de détection (15) pour détecter l'emplacement de l'actionneur (1); un détecteur de vitesse (18) couplé aux moyens de détection; un générateur de profil de vitesse (17); un circuit de commande de vitesse (19) pour que la vitesse de l'actionneur suive la sortie du générateur de profil de vitesse; des moyens de commutation (20) qui initialement passent la sortie du générateur de forme d'onde trapézoïdale et qui commutent à la sortie du circuit de commande de vitesse lorsque la première sortie dépasse la deuxième sortie; et un amplificateur de puissance (22) du type à commande de courant, couplé à la sortie des moyens de commutation, pour commander le moteur de l'actionneur.

7. Système selon l'une quelconque des revendications 1 à 5, caractérisé par des générateurs primaire et secondaire de profil de vitesse de référence (51, 52), couplés à un circuit de commande de paramètre (54) ayant une table de mémoire qui stocke des données pour définir un profil de vitesse de référence en fonction de la course de recherche; des moyens de détection (15) pour détecter l'emplacement de l'actionneur (1); un détecteur de vitesse (1 8) couplé aux moyens de détection; un circuit de commande de vitesse (19) pour que la vitesse de l'actionneur suive la sortie des générateurs de profil de vitesse de référence; un générateur de signal de vitesse décalée (53), couplé aux générateurs de profil de vitesse de référence; un soustracteur de demi-distance (41 ) pour déterminer le reste de la course de recherche jusqu'à une position de mi-course de recherche; des moyens de commutation (20) qui initialement passent la sortie du générateur primaire de profil de vitesse de référence et qui commutent à la sortie du générateur secondaire de profil de vitesse de référence lorsque ces sorties sont égales et qui commutent ensuite à la sortie du générateur primaire de profil de vitesse de référence, et, après le passage de la position de mi-course de recherche, la séquence de commutation précédente est conduite de façon inverse jusqu'à ce que la vitesse de l'actionneur soit réduite à zéro.

8. Système selon la revendication 6 ou la revendication 7, caractérisé en ce que le générateur ou chaque générateur de profil de vitesse (17; 51, 52) est un générateur de fonction exponentielle;

9. Système de commande d'actionneur selon l'une quelconque des revendications 1 à 6, caractérisé par un générateur de profil de vitesse (57) qui génère un signal de référence de vitesse en fonction de la longueur de la course de vitesse, de sorte que l'actionneur (1 est mû par le courant de commande trapézoïdal; un pointeur de mémoire morte (ROM), (55), pour générer une structure de référence de vitesse en fonction de la course de recherche; un compteur de pistes (56) pour fournir la distance de la course de recherche effectuée et la distance restante en tant que signal impulsionnel qui est généré lorsqu'une tête traverse une piste; un détecteur de mi-course de recherche qui détecte quand la tête a atteint une position de mi-course de recherche; et un sélecteur haut/bas (60) pour indiquer un mode d'accélération ou un mode de décélération; un compteur de temps (61) pour désigner une période de vitesse constante; un limiteur de comptage (62) pour indiquer un changement d'accélération par une impulsion de traversée de piste; et un filtre de lissage (63) pour lisser le signal de vitesse; dans lequel, dans une période d'accélération, le compteur de pistes est incrémenté et le signal de référence de vitesse est fourni par le générateur de profil de vitesse jusqu'à ce que le limiteur de comptage entre en action, et le compteur de pistes s'arrête ensuite et te compteur de temps est incrémenté jusqu'à ce que le détecteur de position de mi-course de recherche reconnaisse que la tête a atteint la position de mi-course de recherche, et, dans une période de décélération, le signal de référence de vitesse est généré en décrémentant les compteurs dans des étapes contraires à la période d'accélération.

**Ansprüche**

1. Betätigungsglied-Zugriffsteuersystem zur Positionierung eines Betätigungsgliedes (1), das einen Magnetkopf während eines Suchhubs, durch Zuführung eines Antriebsstroms zu einem Motor des Betätigungsgliedes, zu einer gewünschten Spur trägt, dadurch gekennzeichnet, daß der Antriebsstrom ein Paar aufeinanderfolgender Signale mit trapezförmiger Wellenform und entgegengesetzter Polarität aufweist und daß der Wellenformfaktor ($\gamma$), der das Verhältnis der Spitzenplateaudauer ($T_{CON}$) zur Basisdauer ($T_{ACC}$) der trapezförmigen Wellenform ist, von der Länge des Suchhubs derart abhängig ist, daß der Faktor mit zunehmender Suchhublänge zunimmt, wodurch einerseits die mechanische Resonanzfrequenz des Betätigungsgliedes mit einer Frequenz ($f_1$) im Leistungsspektrum der trapezförmigen Wellenform, bei der der Leistungspegel niedrig oder Null ist, zusammenfällt und andererseits die Leistungsaufnahme des Motors minimisiert ist.

2. System nach Anspruch 1, dadurch gekennzeichnet, daß das Betätigungsglied (1) ein Mehrfach-Betätigungsglied mit mehreren Betätigungsgliedern auf einer Kopfscheibenanordnung ist.

3. System nach Anspruch 1 oder Anspruch 2, dadurch gekennzeichnet, daß die beiden trapezförmigen Ströme die gleiche Wellenform aufweisen.

4. System nach einem der vorstehenden Ansprüche, dadurch gekennzeichnet, daß der Antriebsstrom eine zeitliche Lücke ($T_O$) im Verlauf des Stroms in der Spule zwischen dem ersten und zweiten trapezförmigen Signal aufweist.

5. System nach Anspruch 4, dadurch gekennzeichnet, daß die Lücke ($T_O$) von der Länge des Suchhubs abhängt, so daß, je länger der Suchhub ist, um so länger die Lücke ist.

6. System nach einem der vorstehenden Ansprüche, gekennzeichnet durch einen Trapezsignalgenerator (16) mit einem Tabellenspeicher, der Daten zur Bestimmung der Wellenform in Abhängigkeit von dem Suchhub speichert; einem Feststellmittel (15) zum Feststellen des Ortes des Betätigungsgliedes (1); einen Geschwindigkeitsdetektor (18), der an das Feststellmittel angeschlossen ist; einen Geschwindigkeitsprofilgenerator (17); eine Geschwindigkeitssteuerschaltung (19), die bewirkt, daß die Geschwindigkeit des Betätigungsgliedes dem Ausgangssignal des Geschwindigkeitsprofilgenerators folgt; ein Schaltmittel (20), das anfänglich das Ausgangssignal des Trapezsignalgenerators durchläßt und auf das Ausgangssignal der Geschwindigkeitssteuerschaltung umschaltet, wenn jenes Ausgangssignal das letztere überschreitet; und einen Leistungsverstärker (22) vom Stromregelungstyp, der mit dem Ausgang des Schaltmittels verbunden ist, um den Motor des Betätigungsgliedes anzutreiben.

7. System nach einem der Ansprüche 1 bis 5, gekennzeichnet durch einen primären und einen sekundären Bezugsgeschwindigkeitsprofilgenerator (51, 52), die mit einer Parametersteuerschaltung (54) verbunden sind, die einen Tabellenspeicher enthält, der Daten zur Bestimmung eines Bezugsgeschwindigkeitsprofils in Abhängigkeit von dem Suchhub speichert; ein Feststellmittel (15) zum Feststellen des Ortes des Betätigungsgliedes (1); einen Geschwindigkeitsdetektor (18), der mit dem Feststellmittel verbunden ist; eine Geschwindigkeitssteuerschaltung (19), die bewirkt, daß die Geschwindigkeit des Betätigungsgliedes den Ausgangssignalen der Bezugsgeschwindigkeitsprofilgeneratoren folgt; einen Verschiebungsgeschwindigkeitssignalgenerator (53), der mit den Bezugsgeschwindigkeitsprofilgeneratoren verbunden ist; einen Halbdistanzsubtrahierer (41) zum Bestimmen des restlichen Suchhubs bis zu einer Halbsuchhubposition; ein Schaltmittel (20), das anfänglich das Ausgangssignal des primären Bezugsgeschwindigkeitsprofilgenerators durchläßt und auf das Ausgangssignal des sekundären Bezugsgeschwindigkeitsprofilgenerators umschaltet, wenn diese Ausgangssignale gleich sind, und auf das Ausgangssignal des primären Bezugsgeschwindigkeitsprofilgenerators umschaltet, und das nach Durchlaufen der Halbsuchhubposition die vorangegangene Schaltfolge umgekehrt solange durchläuft, bis sich die Geschwindigkeit des Betätigungsgliedes auf Null verringert hat.

8. System nach Anspruch 6 oder Anspruch 7, dadurch gekennzeichnet, daß der oder jeder Geschwindigkeitsprofilgenerator (17; 51, 52) ein Exponentialfunktionsgenerator ist.

9. System nach einem der Ansprüche 1 bis 6, gekennzeichnet durch einen Geschwindigkeitsprofilgenerator (57), der ein Geschwindigkeitsbezugssignal erzeugt, das von der Länge des Suchhubs derart

EP 0 226 355 B1

abhängt, daß das Betätigungsglied (1) durch den trapezförmigen Antriebsstrom bewegt wird; einen Festspeicher-Hinweisadressengeber (55) zum Erzeugen eines Geschwindigkeitsbezugsmusters in Abhängigkeit von dem Suchhub; einen Spurzähler (56) zum Darstellen der durchlaufenden Suchhubstrecke und der restlichen Strecke als Impulssignal, das erzeugt wird, wenn ein Magnetkopf eine Spur kreuzt; einen Halbsuchhubdetektor (59), der anspricht, wenn der Magnetkopf eine Halbsuchhubposition erreicht hat; einen Aufwärts/Abwärts-Wähler (60) zum Anzeigen einer Beschleunigungsbetriebsart oder einer Abbremsbetriebsart; einen Zeitzähler (61) zur Darstellung einer Periode konstanter Geschwindigkeit; einen Zählwertbegrenzer (62) zum Anzeigen einer Beschleunigungsänderung durch einen Spurkreuzungsimpuls; und einen Glätter (63) zum Glätten des Geschwindigkeitssignals; wobei während einer Beschleunigungsperiode der Zählwert des Spurzählers schrittweise erhöht und das Geschwindigkeitsbezugssignal durch den Geschwindigkeitsprofilgenerator solange erzeugt wird, bis der Zählwertbegrenzer anspricht, und der Spurzähler dann anhält und der Zählwert des Zeitzählers solange schrittweise erhöht wird, bis der Halbsuchhubpositionsdetektor feststellt, daß der Magnetkopf die Halbsuchhubposition erreicht hat, und in einer Abbremsperiode das Geschwindigkeitsbezugssignal durch zur Beschleunigungsperiode entgegengesetztes schrittweises Rückwärtszählen erzeugt wird.

Fig. IA

$T_{CON}$

A

$T_{ACC}$

$T_O$

$T_{ACC}$

$T_S$

t

Fig. IB

POWER SPECTRUM OF TRAPEZOIDAL WAVEFORM

$f_1$          $f_2$     $f_3$          FREQUENCY

PRESENT INVENTION                    PRIOR ART

MECHANICAL RESONANCE                 FREQUENCY

EP 0 226 355 B1

Fig. 2

# Fig. 3

Fig. 4A

# Fig. 4 B

# Fig. 4 C

Fig. 5A

Fig. 5B

Fig. 5C

# Fig. 6

Fig. 7

VELOCITY CONTROL CIRCUIT  — 19

ACC → DIFFERENCE TRACK DATA LATCH CIRCUIT — 33

D/A — 32

DRIVE SIGNAL SWITCHING CIRCUIT — 20

MICRO-PROCESSOR — 31

EP 0 226 355 B1

# Fig. 8 B

# Fig. 8A

```
        START
          │
    ┌─────▼─────┐ ┌101
  N │ ACCESS    │
◄───┤ START ?   │
    └─────┬─────┘
          │ Y      ┌102
    ┌─────▼─────────────┐
    │ INPUT  NUMBER OF  │
    │ DIFFERENCE TRACKS │
    └─────┬─────────────┘
          │
  ┌───────▼──────────────────────┐
  │  MEMORY  READ                │ ┌111
  │ ( T0, T1, T2, T3, T4, T5, T6 )│
  │ ( Δ0, Δ1, Δ2, Δ3, Δ4, Δ5, Δ6 )│
  └───────┬──────────────────────┘
          │
    ┌─────▼──────────────┐ ┌112
    │ TIMER = TN, Δ = ΔN │
    └─────┬──────────────┘
          │
  ┌───────▼────────────────────┐ ┌113
  │ OUT = OUT + ΔN , OUT → D/A  │
  │ TIMER = ΔN-1               │
  └───────┬────────────────────┘
          │
    ┌─────▼─────┐ ┌121      Y
    │ VF > VB ? ├──────────────────┐
    └─────┬─────┘                  │
          │ N                      │
    ┌─────▼─────┐ ┌122             │
  N │ TIMER=0 ? │           ┌──────▼──────────┐ ┌131
◄───┤           │           │ OUTPUT  SWITCH  │
    └─────┬─────┘           │ CONTROL SIGNAL  │
          │ Y               └──────┬──────────┘
                                   │
                              ┌────▼────┐
                              │  RET    │
                              └─────────┘
```

$T_0$ $T_1$ $T_2$ $T_3$ $T_4$ $T_5$ $T_6$
$(\Delta_0)(\Delta_1)(\Delta_2)(\Delta_3)(\Delta_4)(\Delta_5)(\Delta_6)$

# Fig. 9

$$V = k \cdot (x)^{\frac{2}{3}}$$

I → | ← II → | ← III → | ← I →

SEEK          FOLLOW

# Fig. II

$$V = V_{max} - k_{01}(x')^{2/3}$$

$$V = k_{02}(x)^{2/3}$$

V

Vmax

II → | ← III → | ← II → | ← III → | ← t

## Fig. 10

ACC

TRAPEZOIDAL WAVEFORM GENERATOR — 16

20

$x' \neq 0$

41

MAXIMUM VELOCITY SIGNAL GENERATOR — 42

$V_{max}$ 43

19

DRIVE SIGNAL SWITCHING CIRCUIT

HALF DISTANCE SUBTRACTOR

$x'$

$V_{max}-V_{ref}$

(a) ACC

(a) SEEK

15

(a) ACC

VELOCITY PROFILE GENERATOR

(b) DEC

VELOCITY FOLLOWING CONTROL CIRCUIT

POSITION TRANSDUCER

$x$

(b) DEC

$V_{ref}$

17

(b) FOLLOW

23

VELOCITY TRANSDUCER

18

DISTANCE TO TARGET

POSITION FOLLOWING CONTROL CIRCUIT — 21

EP 0 226 355 B1

Fig. 12

EP 0 226 355 B1

## Fig. 13

$V = V_{max} - k_3 \cdot (x')^{2/3}$

$V = V_{max} - k_3 \cdot (-x')^{2/3}$

$V = V_{02} - k_2 \cdot (x)^{1/2}$

$V = V_{01} - k_1 \cdot (x')^{2/3}$

$V = V_{02} - k_2 \cdot (x')^{1/2}$

$V = k_1 \cdot (x)^{2/3}$

$V_{max}$

$\mathrm{IV}_a$ — $\mathrm{V}_a$ — $\mathrm{VI}_a$ — $\mathrm{VI}_d$ — $\mathrm{V}_d$ — $\mathrm{IV}_d$

## Fig. 16

(0.47 µm/div)

$\Delta d$

(0.9A/div)

$I_D$

0     t (m sec)     20

Fig. 14

Fig. 15

VELOCITY PROFILE
SIGNAL

VELOCITY

COUNT
UP

COUNT
DOWN

TRACK COUNT
UP

TIME
COUNT
UP

TIME
COUNT
DOWN

TRACK COUNT
DOWN

DRIVE CURRENT

TIME

EP 0 226 355 B1

Fig. 17A

Fig. 17 B

## Fig. 17C

(0.47 μm/div)

Δd

(0.9A/div)

Id

0            40

→ t (m sec)

## Fig. 18